(19) Europäisches Patentamt / European Patent Office / Office européen des brevets

(11) **EP 3 563 186 B1**

(12) **FASCICULE DE BREVET EUROPÉEN**

(45) Date de publication et mention
de la délivrance du brevet:
**05.01.2022 Bulletin 2022/01**

(51) Int Cl.:
**G02B 6/30** *(2006.01)*    **G02B 6/12** *(2006.01)*
**G02B 6/122** *(2006.01)*    **G02B 6/26** *(2006.01)*

(21) Numéro de dépôt: **17828964.1**

(22) Date de dépôt: **18.12.2017**

(86) Numéro de dépôt international:
**PCT/FR2017/053672**

(87) Numéro de publication internationale:
**WO 2018/122493 (05.07.2018 Gazette 2018/27)**

(54) **DISPOSITIF DE COLLIMATION**

KOLLIMATOR

COLLIMATION DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.12.2016 FR 1663501**

(43) Date de publication de la demande:
**06.11.2019 Bulletin 2019/45**

(73) Titulaire: **Commissariat à l'Energie Atomique et
aux Energies
Alternatives
75015 Paris (FR)**

(72) Inventeur: **BOUTAMI, Salim
38100 Grenoble (FR)**

(74) Mandataire: **Cabinet Beaumont
4, Place Robert Schuman
B.P. 1529
38025 Grenoble Cedex 1 (FR)**

(56) Documents cités:
**US-A1- 2003 035 620    US-A1- 2005 259 935
US-A1- 2010 135 615    US-A1- 2016 011 375**

- **PENG SUN ET AL: "Cantilever couplers for
intra-chip coupling to silicon photonic integrated
circuits", OPTICS EXPRESS, vol. 17, no. 6, 16
mars 2009 (2009-03-16), page 4565, XP055197290,
ISSN: 1094-4087, DOI: 10.1364/OE.17.004565**

Remarques:
Le dossier contient des informations techniques
présentées postérieurement au dépôt de la demande
et ne figurant pas dans le présent fascicule.

**Description**

La présente demande de brevet revendique la priorité de la demande de brevet français FR16/63501 qui sera considérée comme faisant partie intégrante de la présente description.

Domaine

La présente invention concerne de façon générale les circuits optoélectroniques à base de matériaux semiconducteurs et leurs procédés de fabrication. La présente invention concerne plus particulièrement les circuits optoélectroniques comprenant un dispositif de collimation.

Exposé de l'art antérieur

Un circuit optoélectronique est généralement destiné à être couplé à un système externe, par exemple une fibre optique ou un autre circuit optoélectronique. Le circuit optoélectronique doit alors émettre un faisceau lumineux qui est reçu par le système externe. Dans ce but, le circuit optoélectronique comprend généralement un dispositif de collimation qui permet de fournir un faisceau lumineux collimaté et qui permet, en outre, d'adapter la taille du faisceau lumineux émis en fonction du système externe auquel le circuit optoélectronique est couplé. Un faisceau lumineux collimaté est un faisceau dont les rayons sont sensiblement parallèles de sorte que le faisceau ne présente qu'une faible divergence.

Un exemple de dispositif de collimation comprend un élément en silicium en forme de pointe logé dans une gaine. Un tel type de dispositif de collimation est décrit dans la publication intitulée « Cantilever couplers for intra-chip coupling to silicon photonic integrated circuits » aux noms de Peng Sun et Ronald M. Reano (16 mars 2009 / Vol. 17, No. 6 / OPTICS EXPRESS 4565).

Un inconvénient d'un tel type de dispositif de collimation est qu'il requiert la fabrication d'une pointe très fine dont les dimensions doivent être obtenues avec précision étant donné qu'une variation sur les dimensions de la pointe peut perturber de façon importante le fonctionnement du dispositif de collimation. Toutefois, il peut être difficile de fabriquer une pointe très fine avec des dimensions spécifiques de façon précise et reproductible à une échelle industrielle. En outre, pour certaines applications, un dispositif de collimation comprenant un élément en forme de pointe peut ne pas permettre de collimater suffisamment le faisceau lumineux émis par le circuit optoélectronique.

Les documents US 2003/035620, US 2016/011375 et US 2010/135615 décrivent des dispositifs de collimation et/ou de couplage.

Résumé

Un objet d'un mode de réalisation est de pallier tout ou partie des inconvénients des dispositifs de collimation décrits précédemment.

Un autre objet d'un mode de réalisation est que le dispositif de collimation fournisse un faisceau lumineux sensiblement collimaté.

Un autre objet d'un mode de réalisation est que le dispositif de collimation ait une structure simple.

Un autre objet d'un mode de réalisation est que le dispositif de collimation puisse être réalisé à une échelle industrielle par des technologies classiques de fabrication de circuits intégrés.

Ainsi, un mode de réalisation prévoit un dispositif de collimation d'un faisceau lumineux selon la revendication 1.

Selon un mode de réalisation, l'indice de réfraction à la longueur d'onde du faisceau lumineux du deuxième élément de collimation évolue selon la deuxième direction au moins en partie selon une loi parabolique.

Selon un mode de réalisation, l'indice de réfraction à la longueur d'onde du faisceau lumineux du deuxième élément de collimation, selon la deuxième direction, augmente de la première valeur à la deuxième valeur, comprend un palier à la deuxième valeur, puis diminue de la deuxième valeur à la première valeur.

Selon un mode de réalisation, l'indice de réfraction à la longueur d'onde du faisceau lumineux augmente depuis la première valeur à la deuxième valeur dans une première portion moins vite qu'une loi parabolique puis dans une deuxième portion plus vite que la loi parabolique.

Selon un mode de réalisation, le deuxième élément de collimation comprend au moins un alliage dont la composition varie selon la deuxième direction.

Selon un mode de réalisation, le deuxième élément de collimation comprend un empilement selon la deuxième direction de plusieurs couches de matériaux ayant des indices de réfraction différents à la longueur d'onde du faisceau lumineux.

Selon un mode de réalisation, le deuxième élément de collimation comprend une alternance de premières et deuxièmes couches, chaque première couche étant en un premier matériau ayant un premier indice de réfraction à la longueur d'onde du faisceau lumineux et chaque deuxième couche étant en un deuxième matériau ayant un deuxième indice de réfraction à la longueur d'onde du faisceau lumineux.

Selon un mode de réalisation, les épaisseurs des premières couches ne sont pas identiques et les épaisseurs des deuxièmes couches ne sont pas identiques.

Un mode de réalisation prévoit également un procédé de fabrication selon la revendication 9.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

les figures 1 et 2 sont respectivement une vue de dessus et une vue en coupe, partielles et schématiques, d'un mode de réalisation d'un dispositif de collimation comprenant des premier et deuxième éléments de collimation ;
la figure 3 représente une courbe d'évolution de l'indice de réfraction dans un mode de réalisation du deuxième élément du dispositif de collimation représenté sur les figures 1 et 2 ;
les figures 4A, 5A et 6A représentent des vues en coupe analogues à la figure 2 de dispositifs de collimation utilisés respectivement pour des première, deuxième et troisième simulations et les figures 4B, 5B et 6B représentent des cartes d'isolignes de la composante selon la direction (Oy) du champ d'excitation magnétique obtenues respectivement pour les première, deuxième et troisième simulations ;
les figures 7 et 8 illustrent deux applications du dispositif de collimation représenté sur les figures 1 et 2 ;
les figures 9, 10 et 11 sont des vues en coupe analogues à la figure 2 illustrant trois modes de réalisation du deuxième élément de collimation du dispositif de collimation ;
les figures 12A à 12H sont des vues en coupe, partielles et schématiques, de structures obtenues à des étapes successives d'un mode de réalisation d'un procédé de fabrication du dispositif de collimation représenté sur les figures 1 et 2 ; et
les figures 13A et 14A représentent des courbes d'évolution de l'indice de réfraction dans un élément du dispositif de collimation respectivement pour des quatrième et cinquième simulations et les figures 13B et 14B représentent des cartes d'isolignes de la composante selon la direction (Oy) du champ d'excitation magnétique obtenues respectivement pour les quatrième et cinquième simulations.

Description détaillée

De mêmes éléments ont été désignés par de mêmes références dans les différentes figures. Par souci de clarté, seuls les éléments utiles à la compréhension des modes de réalisation décrits ont été représentés et sont détaillés. En particulier, les structures possibles d'un circuit optoélectronique sont bien connues d'un homme du métier et ne sont pas décrites en détail par la suite. Sauf précision contraire, les expressions "approximativement", "sensiblement", et "de l'ordre de" signifient à 10 % près, de préférence à 5 % près.

Dans la suite de la description, on considère un repère orthonormé (Oxyz). Dans un mode de réalisation, le dispositif de collimation est formé par un empilement de couches semiconductrices selon une direction d'empilement correspondant à la direction (Oz).

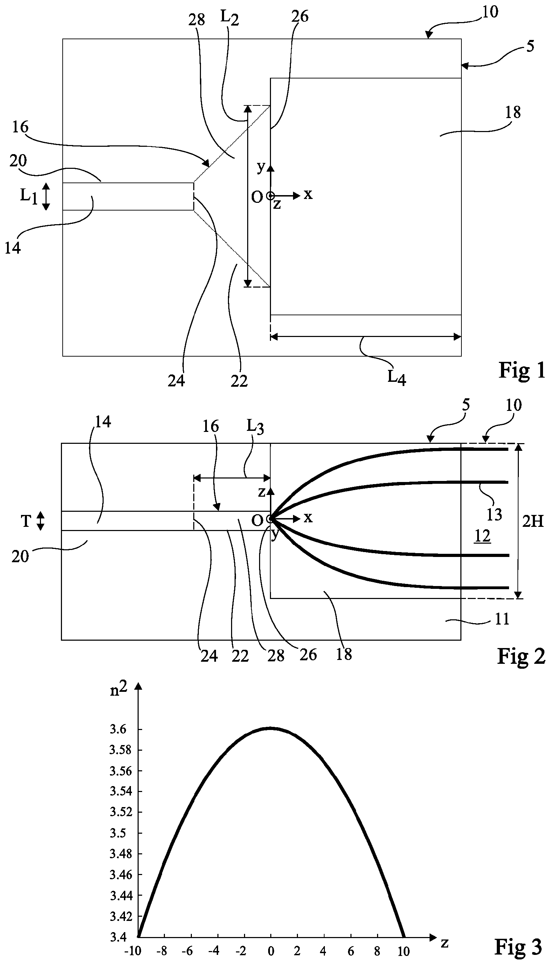

Les figures 1 et 2 sont respectivement une vue de dessus et une vue en coupe, partielles et schématiques, d'un mode de réalisation d'un dispositif de collimation 5. Le dispositif de collimation 5 fait partie d'un circuit optoélectronique 10 qui n'est que partiellement représenté sur les figures. Le circuit optoélectronique 10 peut notamment comprendre au moins un dispositif de génération d'un signal optique, par exemple une source laser, des dispositifs de transmission de signaux optiques, des dispositifs de traitement (modulation, amplification) de signaux optiques et/ou des dispositifs de conversion de signaux optiques. De façon schématique, on a représenté sur la figure 2 un substrat 11 sur lequel le dispositif de collimation 5 est formé.

Le dispositif de collimation 5 permet l'émission d'un faisceau lumineux 12 collimaté dont les rayons sont sensiblement parallèles à la direction (Ox). En figure 2, on a représenté des rayons 13 du faisceau 12. Le faisceau lumineux 12 peut être un faisceau monochromatique ou polychromatique. De préférence, le faisceau lumineux 12 est sensiblement monochromatique. Lorsque le faisceau 12 est polychromatique, la longueur d'onde du faisceau peut prendre différentes valeurs sur une plage de longueurs d'ondes. La longueur d'onde du faisceau lumineux collimaté par le dispositif de collimation 5 est appelée longueur d'onde d'intérêt par la suite. Dans la suite de la description, sauf indication contraire, lorsqu'il est fait mention de l'indice de réfraction d'un matériau, il s'agit de l'indice de réfraction à la longueur d'onde d'intérêt.

Selon un mode de réalisation, le dispositif de collimation 5 a une structure à symétrie planaire par rapport au plan (Oxy) et par rapport au plan (Oxz).

Le dispositif de collimation 5 comprend trois éléments :

un guide d'onde monomode 14 ;

un premier élément 16 qui permet de collimater les rayons lumineux parallèlement à un premier plan P1, par exemple le plan (Oxz) ; et

un deuxième élément 18 qui permet de collimater les rayons lumineux parallèlement à un deuxième plan P2, par exemple le plan (Oxy), différent du premier plan P1 et, de préférence sensiblement perpendiculaire au premier plan P1.

Le guide d'onde 14 est en un premier matériau, par exemple un premier matériau semiconducteur, et est entouré par une gaine 20 en un deuxième matériau, par exemple un deuxième matériau semiconducteur. L'indice de réfraction du premier matériau est strictement supérieur à l'indice de réfraction du deuxième matériau. Le choix des premier et deuxième matériaux dépend notamment de la longueur d'onde du faisceau lumineux à collimater.

Selon un exemple, pour la collimation d'un faisceau monochromatique dont la longueur d'onde peut varier de 2 $\mu$m à 12 $\mu$m, le premier matériau peut être un alliage de silicium et de germanium (SiGe) et le deuxième matériau peut être du silicium (Si). Selon un autre exemple, pour la collimation d'un faisceau monochromatique utilisé dans les télécommunications et dont la longueur d'onde dans le vide peut être de l'ordre de 1,55 $\mu$m, les premier et deuxième matériaux peuvent correspondre à des matériaux semiconducteurs comportant majoritairement un composé III-V, par exemple un composé III-N notamment lorsque le dispositif de collimation 5 est prévu sur un circuit optoélectronique 10 comprenant un dispositif de génération d'un faisceau lumineux, par exemple une diode laser. Des exemples d'éléments du groupe III comprennent le gallium (Ga), l'indium (In) ou l'aluminium (Al). Des exemples de composés III-N sont GaN, AlN, InN, InGaN, AlGaN ou AlInGaN. D'autres éléments du groupe V peuvent également être utilisés, par exemple, le phosphore (P) ou l'arsenic (As). Selon un autre exemple, pour la collimation d'un faisceau monochromatique utilisé dans les télécommunications et dont la longueur d'onde dans le vide peut être de l'ordre de 1,55 $\mu$m, le premier matériau peut être du Si et le deuxième matériau peut être du dioxyde de silicium (SiO$_2$) notamment lorsque le dispositif de collimation 5 est prévu sur un circuit optoélectronique 10 ne comprenant pas de dispositif de génération d'un faisceau lumineux. On peut également envisager pour ce cas comme premier matériau du nitrure de silicium (SiN), et comme deuxième matériau du dioxyde de silicium (SiO$_2$).

Les dimensions du guide d'onde 14 font qu'il ne permet la propagation d'un rayonnement électromagnétique à la longueur d'onde d'intérêt que selon un seul mode de propagation. Selon un mode de réalisation, le guide d'onde 14 a une section droite rectangulaire ayant une hauteur T, mesurée selon la direction (Oz), et une largeur L$_1$, mesurée selon la direction (Oy).

Le premier élément de collimation 16 est en le premier matériau et est entouré d'une gaine 22 en le deuxième matériau. Le premier élément de collimation 16 comprend une première extrémité 24 connectée à une extrémité du guide d'onde 14 et une deuxième extrémité 26 connectée au deuxième élément de collimation 18 et un corps 28 s'étendant entre la première extrémité 24 et la deuxième extrémité 26. Le corps 28 a une forme divergente de la première extrémité 24 jusqu'à la deuxième extrémité 26. Selon un mode de réalisation, le premier élément de collimation 16 a une section droite rectangulaire ayant la même hauteur T, mesurée selon la direction (Oz), que le guide d'onde et dont la largeur, mesurée selon la direction (Oy), croît depuis la largeur L$_1$ à la première extrémité 24 à une largeur L$_2$ à la deuxième extrémité 26. On appelle longueur L$_3$ du premier élément de collimation 16 la distance mesurée selon la direction (Ox) entre la première extrémité 24 et la deuxième extrémité 26.

Selon un mode de réalisation, le premier élément de collimation 16 a, en vue de dessus, la forme d'un trapèze dont la petite base correspond à la première extrémité 24 et dont la grande base correspond à la deuxième extrémité 26.

La hauteur T peut être comprise entre 0,1 $\mu$m et 10 $\mu$m. La largeur L$_1$ peut être comprise entre 0,1 $\mu$m et 10 $\mu$m. La largeur L$_2$ peut être comprise entre 1 $\mu$m et 100 $\mu$m. La longueur L$_3$ peut être comprise entre 10 $\mu$m et 1 mm.

Le deuxième élément de collimation 18 a une hauteur 2*H, mesurée selon la direction (Oz), et une longueur L$_4$, mesurée selon la direction (Ox).

Le deuxième élément de collimation 18 comprend un indice de réfraction qui est sensiblement constant dans n'importe quel plan parallèle au plan (Oxy) et qui selon la direction (Oz) augmente d'un indice de réfraction minimal $\mathbf{n_g}$ à un indice de réfraction maximal $\mathbf{n_c}$ puis diminue jusqu'à l'indice de réfraction minimal $\mathbf{n_g}$. L'indice de réfraction est égal à l'indice de réfraction maximal $\mathbf{n_c}$ pour z égal à 0 et est égal à l'indice de réfraction minimal $\mathbf{n_g}$ pour z égal à $\pm$H.

La loi d'évolution du gradient d'indice dans le deuxième élément de collimation 18 est choisie pour permettre l'obtention d'une collimation du faisceau émis par le deuxième élément de collimation 18.

Selon un mode de réalisation, dans le deuxième élément de collimation 18, l'indice de réfraction $\mathbf{n}$ évolue de façon parabolique, par exemple selon la relation (I) suivante :

$$n^2(z) = n_c^2 \left[ 1 - \left( \frac{n_c^2 - n_g^2}{n_c^2} \right) \left( \frac{z}{H} \right)^2 \right] \qquad (\mathrm{I})$$

4

pour z compris entre -H et H.

Le gradient de l'indice, qui a pour effet de courber la lumière, est lié à la dérivée de la relation (I). Le gradient est nul pour le plan (Oxy), et augmente en s'éloignant du plan (Oxy). Plus un rayon s'éloigne du plan (Oxy), plus il a tendance à être courbé pour revenir vers le plan (Oxy). L'indice étant plus faible, il se propage également plus vite.

La figure 3 représente la courbe d'évolution de l'indice de réfraction au carré $n^2$ dans le deuxième élément de collimation 18 selon la relation (I) selon la direction (Oz).

Le fonctionnement du dispositif de collimation 5 est le suivant. En sortie du guide d'onde 14, le faisceau lumineux est élargi dans la direction (Oy) de sorte que, à la deuxième extrémité 26, le faisceau lumineux est sensiblement collimaté parallèlement au plan (Oxz). Dans le deuxième élément de collimation 18, en raison du gradient d'indice selon la direction (Oz), les rayons lumineux empruntent des trajets courbes dans des plans sensiblement parallèles au plan (Oxz) oscillant périodiquement le long de la direction de propagation (Ox).

La longueur $L_4$ est alors choisie de façon que les rayons lumineux s'échappent du deuxième élément de collimation 18 en étant sensiblement parallèles au plan (Oxy). Une collimation du faisceau parallèlement à la direction (Ox) est ainsi obtenue.

La longueur $L_4$ est donnée par la relation (II) suivante :

$$L_4 = \frac{\pi H n_c}{2\sqrt{n_c^2 - n_g^2}} \qquad\qquad (II)$$

De préférence, dans le cas où le faisceau incident est polychromatique, les indices de réfraction $n_c$ et $n_g$ sont sensiblement indépendants de la longueur d'onde sur la plage de longueurs d'ondes du faisceau de sorte qu'une collimation du faisceau est obtenue sur toute la plage de longueurs d'ondes du faisceau.

Des première, deuxième et troisième simulations ont été réalisées par calcul de différences finies dans le domaine temporel.

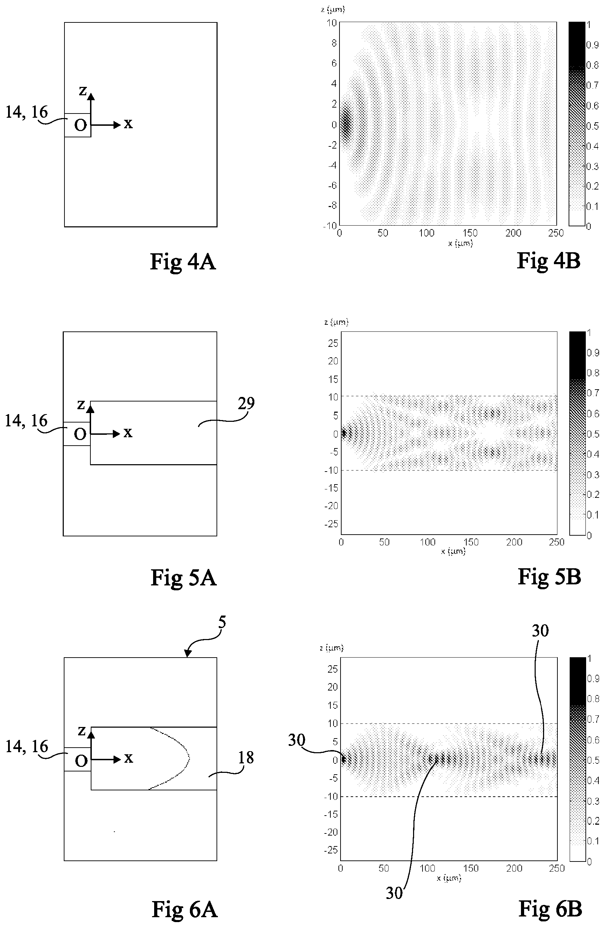

Les figures 4A, 5A et 6A représentent des vues en coupe analogues à la figure 2 des dispositifs de collimation utilisés respectivement pour les première, deuxième et troisième simulations. Dans la première simulation, le dispositif de collimation avait la structure représentée sur les figures 1 et 2 à la différence que le deuxième élément de collimation 18 n'était pas présent. Dans la deuxième simulation, le dispositif de collimation avait la structure représentée sur les figures 1 et 2 à la différence que le deuxième élément de collimation 18 était remplacé par un élément 29 de mêmes dimensions mais ayant un indice de réfraction constant. Dans la troisième simulation, le dispositif de collimation 5 avait la structure représentée sur les figures 1 et 2.

Pour les première, deuxième et troisième simulations, la longueur d'onde d'intérêt λ était de 4,5 μm. Pour les trois simulations, le guide d'onde 14 et le premier élément de collimation 16 étaient en SiGe avec 40 % en poids de germanium qui présente un indice de réfraction à 4,5 μm de 3,6 et les gaines 20 et 22 étaient en Si qui présente un indice de réfraction à 4,5 μm de 3,4. La hauteur T était de 3 μm et la hauteur H était de 10 μm. Le rayonnement se propageant dans le guide d'onde 14 était polarisé TM, c'est-à-dire que le champ magnétique était orienté selon (Oy).

Les figures 4B, 5B et 6B représentent des cartes d'isolignes de la composante selon la direction (Oy) du champ d'excitation magnétique obtenues avec les première, deuxième et troisième simulations.

La figure 4B traduit la diffraction du faisceau lumineux en l'absence du deuxième élément de collimation. La figure 5B traduit une absence de collimation du faisceau lumineux dans l'élément 29. La figure 6B montre que la structure du dispositif de collimation 5 de la figure 6A entraîne une alternance de collimation et de focalisation du faisceau lumineux. Pour obtenir l'émission d'un faisceau lumineux collimaté, il suffit de choisir la longueur $L_4$ pour que le deuxième élément de collimation 18 s'arrête à un endroit où le faisceau est collimaté, c'est-à-dire à mi-chemin entre deux noeuds 30 où le faisceau lumineux est concentré en une zone réduite. La figure 6B montre qu'il suffit de choisir $L_4$ égal à 47 μm, ce qui peut en outre se déduire de la relation (II).

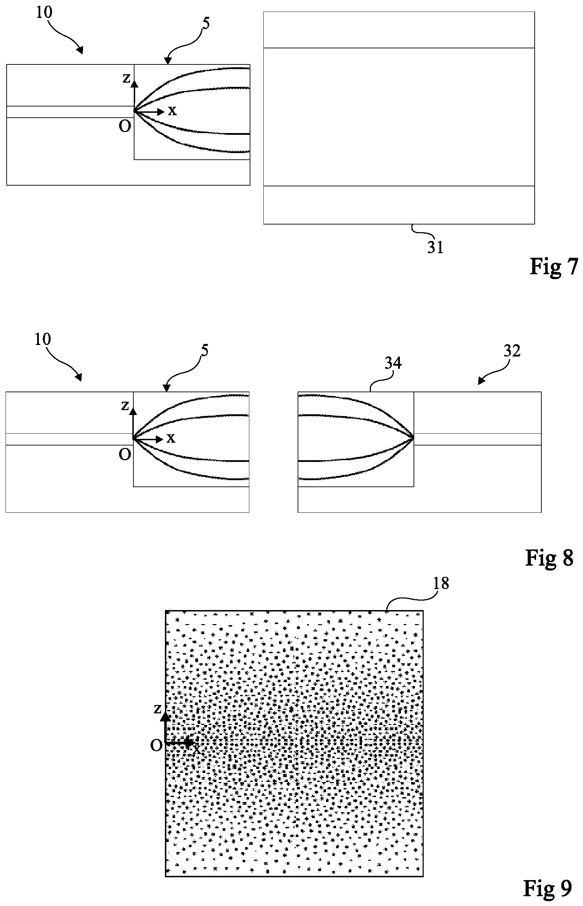

La figure 7 illustre une application du dispositif de collimation 5 dans lequel circuit optoélectronique 10 est couplé à une fibre optique 31, le dispositif de collimation 5 étant disposé en vis-à-vis d'une extrémité de la fibre optique 31.

La figure 8 illustre une autre application du dispositif de collimation 5 dans lequel le circuit optoélectronique 10 est couplé à un autre circuit optoélectronique 32, le dispositif de collimation 5 étant placé en vis-à-vis d'un autre dispositif de collimation 34 du circuit optoélectronique 32 qui peut avoir la même structure que le dispositif de collimation 5.

De façon avantageuse, pour les applications illustrées sur les figures 7 et 8, le faisceau lumineux émis par le dispositif de collimation 5 étant de grande taille, une tolérance d'alignement importante peut être obtenue.

La figure 9 illustre un mode de réalisation du deuxième élément de collimation 18. Dans ce mode de réalisation, le deuxième élément de collimation 18 est formé par le dépôt, par exemple par épitaxie, d'une couche semiconductrice dont la composition est modifiée de façon continue au cours du dépôt pour obtenir la variation souhaitée de l'indice de réfraction, notamment selon la relation (I). Lorsque le deuxième élément de collimation 18 correspond à un alliage d'un premier élément et d'un deuxième élément, par exemple du SiGe, la variation de l'indice de réfraction peut être obtenue en faisant varier de façon continue la proportion du premier élément par rapport au deuxième élément dans l'alliage au cours du dépôt de l'alliage.

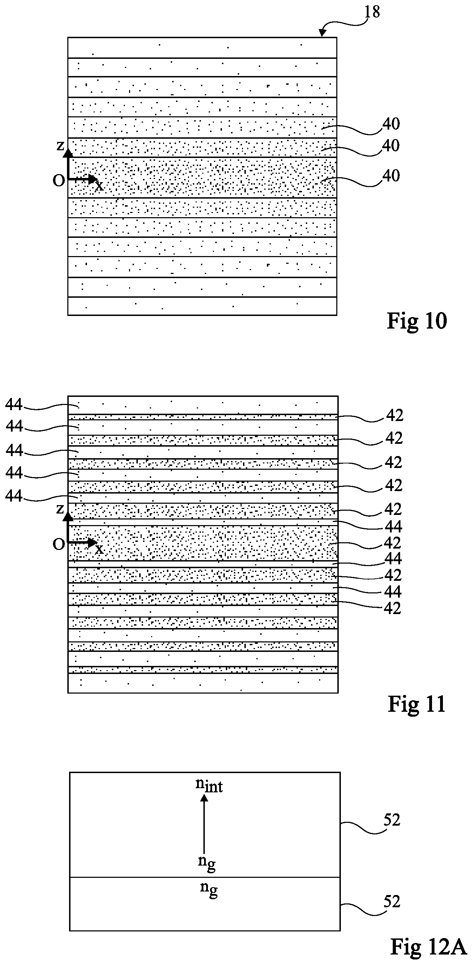

La figure 10 illustre un autre mode de réalisation du deuxième élément de collimation 18. Dans ce mode de réalisation, le deuxième élément de collimation 18 est formé par un empilement de plusieurs couches semiconductrices 40 de compositions différentes, chaque couche 40 ayant une composition homogène choisie pour obtenir un indice de réfraction déterminé. On obtient alors une évolution de l'indice de réfraction par paliers selon la direction (Oz) et qui, par exemple, peut suivre de façon approximative la relation (I). Le procédé de fabrication du deuxième élément de collimation 18 selon le mode de réalisation illustré en figure 10 peut être plus simple que le procédé de fabrication du deuxième élément de collimation 18 selon le mode de réalisation illustré en figure 9.

La figure 11 illustre un autre mode de réalisation du deuxième élément de collimation 18. Dans ce mode de réalisation, le deuxième élément de collimation 18 est formé par un empilement selon la direction (Oz) comprenant une alternance de premières couches 42 ayant une première composition, et donc un premier indice de réfraction $n_c$ et de deuxièmes couches 44 ayant une deuxième composition, et donc un deuxième indice de réfraction $n_g$. Les épaisseurs des couches 42 et 44 sont inférieures à au moins le cinquième de la longueur d'onde d'intérêt de sorte que la lumière traversant le deuxième élément de collimation 18 voit localement un indice de réfraction moyen lié au rapport des épaisseurs des première et deuxième couches 42 et 44 les plus proches. Les épaisseurs des première et deuxième couches sont alors choisies pour que l'indice de réfraction moyen local varie de la façon souhaitée selon la direction (Oz), par exemple en se rapprochant de la relation (I). Le procédé de fabrication du deuxième élément de collimation 18 selon le mode de réalisation illustré en figure 11 peut être plus simple que le procédé de fabrication du deuxième élément de collimation 18 selon le mode de réalisation illustré en figure 10.

Les figures 12A à 12H sont des vues en coupe, partielles et schématiques, des structures obtenues à des étapes successives d'un mode de réalisation d'un procédé de fabrication du dispositif de collimation 5 représenté sur les figures 1 et 2 pour lequel le deuxième élément collimation 18 peut avoir l'une des structures représentées sur les figures 9, 10 ou 11. Sur les figures 12A à 12H, la direction (Oz) non représentée correspond à la direction verticale.

Le procédé comprend les étapes successives suivantes :

(1) Formation, par exemple par épitaxie, sur un substrat 50 présentant à son sommet un indice de réfraction égal à $n_g$, d'une couche 52 dont l'indice de réfraction varie selon la direction (Oz) de $n_g$ à la base de la couche 52 à $n_{int}$ au sommet de la couche 52, $n_{int}$ étant strictement supérieur à $n_g$ (figure 12A) . Le substrat 50 peut correspondre à une structure monobloc ou correspondre à une couche recouvrant un support constitué d'un autre matériau. Le substrat 50 peut être un substrat semiconducteur, par exemple un substrat en silicium, en germanium, en carbure de silicium, en un composé III-V, tel que du GaN ou du GaAs, ou un substrat en ZnO. Le substrat 50 peut correspondre à une structure multicouches de type silicium sur isolant, également appelée SOI (acronyme anglais pour Silicon On Insulator). La couche 52 peut avoir l'une des structures représentées sur les figures 9, 10 ou 11.

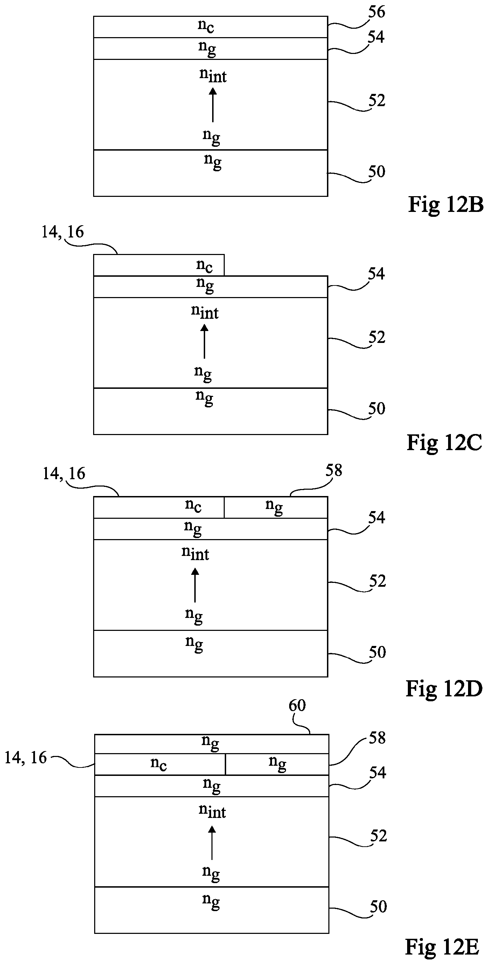

(2) Dépôt d'une couche 54 d'un matériau dont l'indice de réfraction est égal à $n_g$ et d'une couche 56 d'un matériau semiconducteur dont l'indice de réfraction est égal à $n_c$ qui est strictement supérieur à $n_{int}$ (figure 12B) .

(3) Gravure d'une partie de la couche 56 avec arrêt sur la couche 54 pour délimiter le guide d'onde 14 et le premier élément de collimation 16 (figure 12C).

(4) Dépôt d'une couche du matériau dont l'indice de réfraction est égal à $n_g$ sur l'ensemble de la structure et gravure de la couche, par exemple par une planarisation mécanochimique ou CMP (sigle anglais pour Chemical Mechanical Planarization), pour délimiter une couche 58 de même hauteur que le guide d'onde 14 et le premier élément de collimation 16 autour de ceux-ci (figure 12D) ;

(5) Dépôt d'une couche 60 du matériau dont l'indice de réfraction est égal à $n_g$ sur l'ensemble de la structure (figure 12E) .

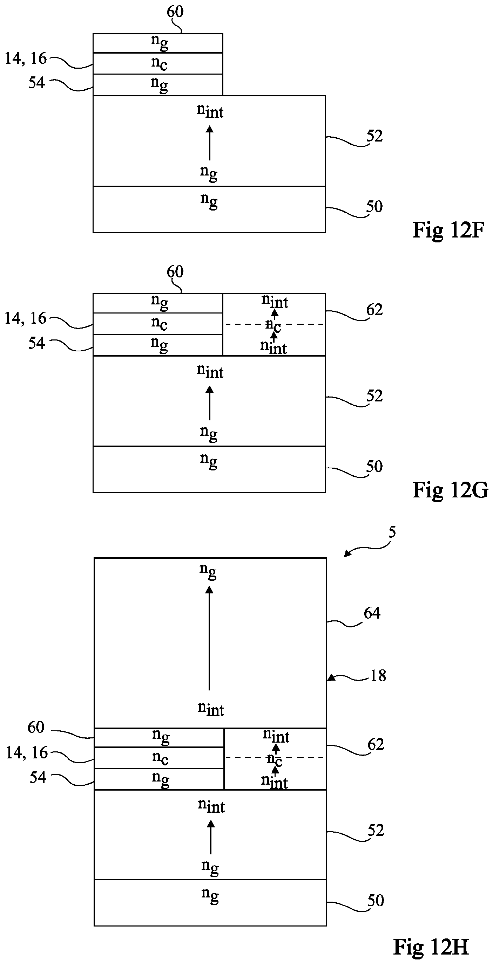

(6) Gravure des parties des couches 54, 58 et 60 à l'emplacement souhaité du deuxième élément de collimation 18 (figure 12F).

(7) Formation, par exemple par épitaxie, sur l'ensemble de la structure, d'une couche dont l'indice de réfraction augmente selon la direction (Oz) de $n_{int}$ à la base de la couche à $n_c$ au milieu de la couche puis diminue jusqu'à $n_{int}$ au sommet de la couche et gravure de la couche, par exemple par une planarisation mécanochimique, avec arrêt sur la couche 60 pour délimiter une couche 62 reposant sur la couche 52 (figure 12G) . La couche 62 peut avoir l'une des structures représentées sur les figures 9, 10 ou 11.

(8) Formation, par exemple par épitaxie, sur l'ensemble de la structure, d'une couche semiconductrice 64 dont l'indice de réfraction augmente selon la direction (Oz) de $n_{int}$ à la base de la couche jusqu'à $n_g$ au sommet de la couche (figure 12H). La couche 64 peut avoir l'une des structures représentées sur les figures 9, 10 ou 11.

Le deuxième élément de collimation 18 est formé par les couches 52, 62 et 64. La gaine 20 du guide d'onde 14 et la gaine 22 du premier élément de collimation 16 sont formées par les couches 54, 58 et 60.

Un autre mode de réalisation d'un procédé de fabrication comprend l'ensemble des étapes décrites précédemment à la différence que les étapes (1), (7) et (8) sont respectivement remplacées par les étapes (1)', (7)' et (8)' suivantes :

(1)' identique à l'étape (1) décrite précédemment à la différence que l'indice de réfraction varie selon la direction (Oz) de la valeur $n_g$ à la base de la couche 52 à la valeur $n_c$ au sommet de la couche ;

(7)' identique à l'étape (7) décrite précédemment à la différence que l'indice de réfraction de la couche 62 est constant et égal à $n_c$ ;

(8)' identique à l'étape (8) décrite précédemment à la différence que l'indice de réfraction varie selon la direction (Oz) de la valeur $n_c$ à la base de la couche 64 à la valeur $n_g$ au sommet de la couche 64.

Le présent mode de réalisation présente l'avantage que la formation de la couche 62 est plus simple, notamment à l'étape de gravure décrite précédemment à l'étape (7)'. Toutefois, la structure du deuxième élément de collimation 18 ne permet alors pas d'obtenir un profil de variation de l'indice de réfraction qui suit la relation (I) décrite précédemment puisque l'indice de réfraction dans la couche centrale 62 du deuxième élément de collimation 18 est constant.

En outre, l'inventeur a mis en évidence que lorsque l'indice de réfraction est constant dans la couche centrale 62, le gradient d'indice dans les couches 52 et 64 ne peut pas suivre une loi parabolique. En effet, dans ce cas, il n'est pas possible d'obtenir une collimation convenable du faisceau émis par le deuxième élément de collimation 18. L'inventeur a mis en évidence que, pour obtenir une collimation convenable, l'indice de réfraction doit évoluer dans le deuxième élément de collimation 18 selon les relations (III) suivantes, en considérant que la couche centrale 62 s'étend de z égal à $-z_0$ à z égal à $z_0$ :

pour z compris entre $-z_0$ et $z_0$ :

$$n^2(z) = n_c^2 \qquad\qquad\qquad (III)$$

pour z compris entre $z_0$ et H :

$$n^2(z) = n_c^2 \left[ 1 - \left( \frac{n_c^2 - n_g^2}{n_c^2} \right) \left[ \left( \frac{H - 3z_0}{H - z_0} \right) \left( \frac{z - z_0}{H - z_0} \right)^2 + \left( \frac{2z_0}{H - z_0} \right) \left( \frac{z - z_0}{H - z_0} \right) \right] \right]$$

pour z compris entre $-z_0$ et -H :

$$n^2(z) = n_c^2 \left[ 1 - \left( \frac{n_c^2 - n_g^2}{n_c^2} \right) \left[ \left( \frac{H - 3z_0}{H - z_0} \right) \left( \frac{z + z_0}{H - z_0} \right)^2 - \left( \frac{2z_0}{H - z_0} \right) \left( \frac{z + z_0}{H - z_0} \right) \right] \right]$$

Des quatrième et cinquième simulations ont été réalisées par calcul de différences finies dans le domaine temporel.

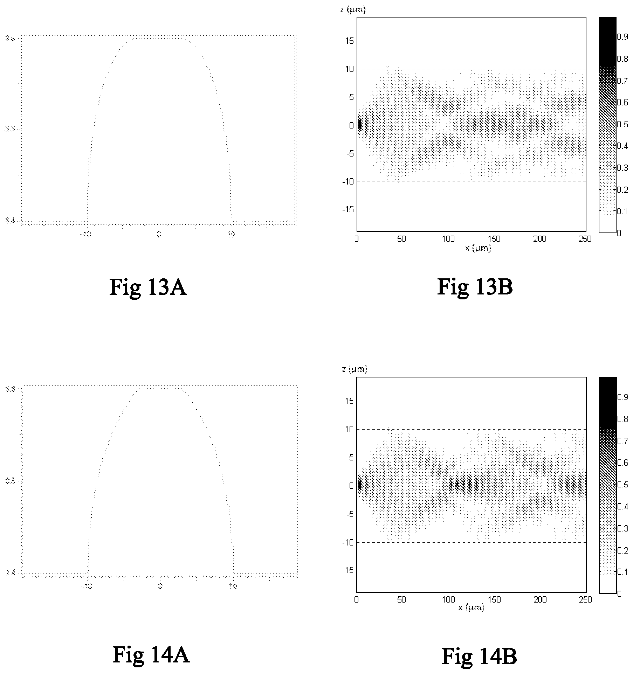

Les figures 13A et 14A représentent des courbes d'évolution de l'indice de réfraction dans le deuxième élément de collimation 18 des dispositifs de collimation utilisés respectivement pour les quatrième et cinquième simulations. Pour les quatrième et cinquième simulations, le dispositif de collimation avait la structure représentée sur les figures 1 et 2. Les quatrième et cinquième simulations ont été réalisées dans les mêmes conditions que les première, deuxième et troisième simulations décrites précédemment.

Dans la quatrième simulation, l'indice de réfraction du deuxième élément de collimation 18 était constant pour z entre -z0 et +z0 et suivait une loi parabolique entre -H et -z0 et +z0 et H.

L'indice de réfraction évoluait donc dans le deuxième élément de collimation 18 selon les relations (IV) suivantes :

pour z compris entre -z0 et z0 :

$$n^2(z) = n_c^2 \qquad\qquad\qquad (IV)$$

pour z compris entre z0 et H :

$$n^2(z)=n_c^2\left[1-\left(\frac{n_c^2-n_g^2}{n_c^2}\right)\left(\frac{z-z_0}{H-z_0}\right)^2\right]$$

pour z compris entre $-z_0$ et $-H$ :

$$n^2(z)=n_c^2\left[1-\left(\frac{n_c^2-n_g^2}{n_c^2}\right)\left(\frac{z+z_0}{H-z_0}\right)^2\right]$$

Dans la cinquième simulation, l'indice de réfraction du deuxième élément de collimation 18 suivait une loi (III) décrite précédemment.

Les figures 13B et 14B représentent des cartes d'isolignes de la composante selon la direction (Oy) du champ d'excitation magnétique obtenues dans le deuxième élément de collimation 18 avec les quatrième et cinquième simulations.

La figure 13B montre que le dispositif de collimation 5 dont le deuxième élément de collimation 18 a le profil d'évolution de l'indice de réfraction représenté en figure 13A ne permet pas d'obtenir une bonne focalisation du faisceau lumineux et donc ne permet pas d'obtenir une bonne collimation du faisceau lumineux à mi-distance entre deux focalisations.

La figure 14B montre que le dispositif de collimation 5 dont le deuxième élément de collimation 18 a le profil d'évolution de l'indice de réfraction représenté en figure 14A permet d'obtenir une bonne focalisation du faisceau lumineux et donc permet d'obtenir une bonne collimation du faisceau lumineux à mi-distance entre deux focalisations. La relation (II) précédente reste valable en première approximation.

Des modes de réalisation particuliers ont été décrits. Diverses variantes et modifications apparaîtront à l'homme de l'art.

**Revendications**

1. Dispositif (5) de collimation d'un faisceau lumineux (12) comprenant un guide d'onde monomode (14), un premier élément de collimation (16) du faisceau lumineux parallèlement à un premier plan (Oxz) et un deuxième élément de collimation (18) du faisceau lumineux parallèlement à un deuxième plan (Oxy), le premier élément de collimation reliant le guide d'onde au deuxième élément de collimation, dans lequel le premier élément de collimation (16) comprend un corps (28) relié à une première extrémité (24) au guide d'onde (14) et relié à une deuxième extrémité (26) au deuxième élément de collimation (18) et dont une dimension selon une première direction (Oy) perpendiculaire au premier plan (Oxz) croît de la première extrémité à la deuxième extrémité, et dans lequel le deuxième élément de collimation (18) comprend un indice de réfraction à la longueur d'onde du faisceau lumineux (12) qui, selon une deuxième direction (Oz) perpendiculaire au deuxième plan (Oxy), augmente d'une première valeur $\mathbf{n_g}$ à une deuxième valeur $\mathbf{n_c}$ puis diminue de la deuxième valeur à la première valeur, **caractérisé en ce que** le deuxième élément de collimation (18) a une demi-hauteur H selon la deuxième direction (Oz) et a une longueur $L_4$ selon une troisième direction (Ox) parallèle au premier plan (Oxz) et au deuxième plan (Oxy), la longueur $L_4$ étant donnée par la relation suivante :

$$L_4=\frac{\pi H n_c}{2\sqrt{n_c^2-n_g^2}}$$

2. Dispositif selon la revendication 1, dans lequel l'indice de réfraction à la longueur d'onde du faisceau lumineux (12) du deuxième élément de collimation (18) évolue selon la deuxième direction (Oz) au moins en partie selon une loi parabolique.

3. Dispositif selon la revendication 1, dans lequel l'indice de réfraction à la longueur d'onde du faisceau lumineux (12) du deuxième élément de collimation (18), selon la deuxième direction (Oz), augmente de la première valeur à la deuxième valeur, comprend un palier à la deuxième valeur, puis diminue de la deuxième valeur à la première valeur.

4. Dispositif selon la revendication 3, dans lequel l'indice de réfraction à la longueur d'onde du faisceau lumineux (12) augmente depuis la première valeur à la deuxième valeur dans une première portion moins vite qu'une loi parabolique puis dans une deuxième portion plus vite que la loi parabolique.

5. Dispositif selon l'une quelconque des revendications 1 à 4, dans lequel le deuxième élément de collimation (18) comprend au moins un alliage dont la composition varie selon la deuxième direction (Oz).

6. Dispositif selon l'une quelconque des revendications 1 à 4, dans lequel le deuxième élément de collimation (18) comprend un empilement selon la deuxième direction (Oz) de plusieurs couches (40) de matériaux ayant des indices de réfraction différents à la longueur d'onde du faisceau lumineux (12).

7. Dispositif selon l'une quelconque des revendications 1 à 4, dans lequel le deuxième élément de collimation (18) comprend une alternance de premières et deuxièmes couches (42, 44), chaque première couche (42) étant en un premier matériau ayant un premier indice de réfraction à la longueur d'onde du faisceau lumineux (12) et chaque deuxième couche (44) étant en un deuxième matériau ayant un deuxième indice de réfraction à la longueur d'onde du faisceau lumineux.

8. Dispositif selon la revendication 7, dans lequel les épaisseurs des premières couches (42) ne sont pas identiques et dans lequel les épaisseurs des deuxièmes couches (44) ne sont pas identiques.

9. Procédé de fabrication du dispositif de collimation (5) d'un faisceau lumineux (12) selon l'une quelconque des revendications 1 à 8, le dispositif (5) de collimation comprenant un guide d'onde monomode (14), un premier élément de collimation (16) du faisceau lumineux parallèlement à un premier plan (Oxz) et un deuxième élément de collimation (18) du faisceau lumineux parallèlement à un deuxième plan (Oxy), le premier élément de collimation reliant le guide d'onde au deuxième élément de collimation, le procédé comprenant les étapes successives suivantes :

former une première partie (52) du deuxième élément de collimation (18) ;
former le guide d'onde (14) et le premier élément de collimation (16), le premier élément de collimation (16) comprenant un corps (28) relié à une première extrémité (24) au guide d'onde (14) et relié à une deuxième extrémité (26) au deuxième élément de collimation (18) et dont une dimension selon une première direction (Oy) perpendiculaire au premier plan (Oxz) croît de la première extrémité à la deuxième extrémité ; et
former une deuxième partie (62, 64) du deuxième élément de collimation (18), le deuxième élément de collimation (18) comprenant un indice de réfraction à la longueur d'onde du faisceau lumineux (12) qui, selon une deuxième direction (Oz) perpendiculaire au deuxième plan (Oxy), augmente d'une première valeur $n_g$ à une deuxième valeur $n_c$ puis diminue de la deuxième valeur à la première valeur, le deuxième élément de collimation (18) ayant une demi-hauteur H selon la deuxième direction (Oz) et ayant une longueur $L_4$ selon une troisième direction (Ox) parallèle au premier plan (Oxz) et au deuxième plan (Oxy), la longueur $L_4$ étant donnée par la relation suivante :

$$L_4 = \frac{\pi H n_c}{2\sqrt{n_c^2 - n_g^2}}$$

**Patentansprüche**

1. Vorrichtung (5) zur Kollimation eines Lichtstrahls (12), wobei die Vorrichtung Folgendes aufweist: einen Monomode-Wellenleiter (14), ein erstes Element (16) zur Kollimation des Lichtstrahls parallel zu einer ersten Ebene (Oxz) und ein zweites Element (18) zur Kollimation des Lichtstrahls parallel zu einer zweiten Ebene (Oxy), wobei das erste Kollimationselement den Wellenleiter mit dem zweiten Kollimationselement koppelt, wobei das erste Kollimationselement (16) einen Körper (28) aufweist, der an einem ersten Ende (24) mit dem Wellenleiter (14) gekoppelt ist und an einem zweiten Ende (26) mit dem zweiten Kollimationselement (18) gekoppelt ist und eine Abmessung entlang einer ersten Richtung (Oy) senkrecht zu der ersten Ebene (Oxz) aufweist, die von dem ersten Ende zu dem zweiten Ende zunimmt, und wobei das zweite Kollimationselement (18) einen Brechungsindex bei der Wellenlänge des Lichtstrahls (12) aufweist, der entlang einer zweiten Richtung (Oz) senkrecht zu der zweiten Ebene (Oxy) von einem ersten Wert $n_g$ auf einen zweiten Wert $n_c$ zunimmt und dann von dem zweiten Wert auf den ersten Wert abnimmt, **dadurch gekennzeichnet, dass** das zweite Kollimationselement (18) eine halbe Höhe H entlang der zweiten Richtung (Oz) und eine Länge $L_4$ entlang einer dritten Richtung (Ox) parallel zur ersten Ebene (Oxz) und zur zweiten Ebene (Oxy) aufweist, wobei die Länge $L_4$ durch die folgende Beziehung gegeben ist:

$$L_4 = \frac{\pi H n_c}{2\sqrt{n_c^2 - n_g^2}}$$

2. Vorrichtung nach Anspruch 1, wobei der Brechungsindex bei der Wellenlänge des Lichtstrahls (12) des zweiten Kollimationselements (18) entlang der zweiten Richtung (Oz) zumindest teilweise gemäß einer parabolischen Funktion variiert.

3. Vorrichtung nach Anspruch 1, wobei der Brechungsindex bei der Wellenlänge des Lichtstrahls (12) des zweiten Kollimationselements (18) entlang der zweiten Richtung (Oz) von dem ersten Wert auf den zweiten Wert ansteigt, bei dem zweiten Wert ein Plateau aufweist und dann von dem zweiten Wert auf den ersten Wert abfällt.

4. Vorrichtung nach Anspruch 3, wobei der Brechungsindex bei der Wellenlänge des Lichtstrahls (12) von dem ersten Wert auf den zweiten Wert in einem ersten Abschnitt langsamer als eine parabolisches Funktion und dann in einem zweiten Abschnitt schneller als die parabolische Funktion zunimmt.

5. Vorrichtung nach einem der Ansprüche 1 bis 4, wobei das zweite Kollimationselement (18) mindestens eine Legierung aufweist, deren Zusammensetzung entlang der zweiten Richtung (Oz) variiert.

6. Vorrichtung nach einem der Ansprüche 1 bis 4, wobei das zweite Kollimationselement (18) entlang der zweiten Richtung (Oz) einen Stapel aus einer Vielzahl von Schichten (40) aus Materialien mit unterschiedlichen Brechungsindizes bei der Wellenlänge des Lichtstrahls (12) aufweist.

7. Vorrichtung nach einem der Ansprüche 1 bis 4, wobei das zweite Kollimationselement (18) abwechselnd erste und zweite Schichten (42, 44) aufweist, wobei jede erste Schicht (42) aus einem ersten Material mit einem ersten Brechungsindex bei der Wellenlänge des Lichtstrahls (12) besteht und jede zweite Schicht (44) aus einem zweiten Material mit einem zweiten Brechungsindex bei der Wellenlänge des Lichtstrahls besteht.

8. Vorrichtung nach Anspruch 7, wobei die Dicken der ersten Schichten (42) nicht identisch sind und wobei die Dicken der zweiten Schichten (44) nicht identisch sind.

9. Verfahren zur Herstellung der Kollimationsvorrichtung (5) eines Lichtstrahls (12) nach einem der Ansprüche 1 bis 8, wobei die Kollimationsvorrichtung (5) einen Monomode-Wellenleiter (14), ein erstes Element (16) zur Kollimation des Lichtstrahls parallel zu einer ersten Ebene (Oxz) und ein zweites Element (18) zur Kollimation des Lichtstrahls parallel zu einer zweiten Ebene (Oxy) aufweist, wobei das erste Kollimationselement den Wellenleiter mit dem zweiten Kollimationselement koppelt, wobei das Verfahren die folgenden aufeinanderfolgenden Schritte aufweist:

Ausbilden eines ersten Abschnitts (52) des zweiten Kollimationselements (18);
Ausbilden des Wellenleiters (14) und des ersten Kollimationselements (16), wobei das erste Kollimationselement (16) einen Körper (28) aufweist, der an einem ersten Ende (24) mit dem Wellenleiter (14) und an einem zweiten Ende (26) mit dem zweiten Kollimationselement (18) gekoppelt ist und eine Abmessung entlang einer ersten Richtung (Oy) senkrecht zu der ersten Ebene (Oxz) aufweist, die von dem ersten Ende zu dem zweiten Ende zunimmt; und
Ausbilden eines zweiten Abschnitts (62, 64) des zweiten Kollimationselements (18), wobei das zweite Kollimationselement (18) einen Brechungsindex bei der Wellenlänge des Lichtstrahls (12) aufweist, der entlang einer zweiten Richtung (Oz) senkrecht zu der zweiten Ebene (Oxy) von einem ersten Wert $n_g$ auf einen zweiten Wert $n_c$ zunimmt, zunimmt und dann von dem zweiten Wert auf den ersten Wert abnimmt, wobei das zweite Kollimationselement (18) eine halbe Höhe H entlang der zweiten Richtung (Oz) und eine Länge $L_4$ entlang einer dritten Richtung (Ox) parallel zu der ersten Ebene (Oxz) und der zweiten Ebene (Oxy) aufweist, wobei die Länge $L_4$ durch die folgende Beziehung gegeben ist:

$$L_4 = \frac{\pi H n_c}{2\sqrt{n_c^2 - n_g^2}}$$

**Claims**

1. A device (5) of collimation of a light beam (12) comprising a monomode waveguide (14), a first element (16) of collimation of the light beam parallel to a first plane (Oxz) and a second element (18) of collimation of the light beam parallel to a second plane (Oxy), the first collimation element coupling the waveguide to the second collimation element, wherein the first collimation element (16) comprises a body (28) coupled at a first end (24) to the waveguide (14) and coupled at a second end (26) to the second collimation element (18) and having a dimension along a first direction (Oy) perpendicular to the first plane (Oxz) increasing from the first end to the second end, and wherein the second collimation element (18) comprises a refraction index at the wavelength of the light beam (12) which, along a second direction (Oz) perpendicular to the second plane (Oxy), increases from a first value $n_g$ to a second value $n_c$, and then decreases from the second value to the first value, **characterized in that** the second collimation element (18) has a half-height H along the second direction (Oz) and has a length $L_4$ along a third direction (Ox) parallel to the first plane (Oxz) and to the second plane (Oxy), length $L_4$ being given by the following relation:

$$L_4 = \frac{\pi H n_c}{2\sqrt{n_c^2 - n_g^2}}$$

2. The device of claim 1, wherein the refraction index at the wavelength of the light beam (12) of the second collimation element (18) varies along the second direction (Oz) at least partly according to a parabolic law.

3. The device of claim 1, wherein the refraction index at the wavelength of the light beam (12) of the second collimation element (18), along the second direction (Oz), increases from the first value to the second value, comprises a plateau at the second value, and then decreases from the second value to the first value.

4. The device of claim 3, wherein the refraction index at the wavelength of the light beam (12) increases from the first value to the second value in a first portion slower than a parabolic law and then, in a second portion, faster than the parabolic law.

5. The device of any of claims 1 to 4, wherein the second collimation element (18) comprises at least one alloy having its composition varying along the second direction (Oz).

6. The device of any of claims 1 to 4, wherein the second collimation element (18) comprises a stack along the second direction (Oz) of a plurality of layers (40) of materials having different refraction indexes at the wavelength of the light beam (12).

7. The device of any of claims 1 to 4, wherein the second collimation element (18) comprises an alternation of first and second layers (42, 44), each first layer (42) being made of a first material having a first refraction index at the wavelength of the light beam (12) and each second layer (44) being made of a second material having a second refraction index at the wavelength of the light beam.

8. The device of claim 7, wherein the thicknesses of the first layers (42) are not identical and wherein the thicknesses of the second layers (44) are not identical.

9. A method of manufacturing the collimation device (5) of a light beam (12) of any of claims 1 to 8, the collimation device (5) comprising a monomode waveguide (14), a first element (16) of collimation of the light beam parallel to a first plane (Oxz) and a second element (18) of collimation of the light beam parallel to a second plane (Oxy), the first collimation element coupling the waveguide to the second collimation element, the method comprising the successive steps of:

forming a first portion (52) of the second collimation element (18);

forming the waveguide (14) and the first collimation element (16), the first collimation element (16) comprising a body (28) coupled at a first end (24) to the waveguide (14) and coupled at a second end (26) to the second collimation element (18) and having a dimension along a first direction (Oy) perpendicular to the first plane (Oxz) increasing from the first end to the second end; and

forming a second portion (62, 64) of the second collimation element (18), the second collimation element (18) comprising a refraction index at the wavelength of the light beam (12) which, along a second direction (Oz) perpendicular to the second plane (Oxy), increases from a first value $n_g$ to a second value $n_c$, and then decreases from the second value to the first value, the second collimation element (18) having a half-height H along the second direction (Oz) and having a length $L_4$ along a third direction (Ox) parallel to the first plane (Oxz) and to the second plane (Oxy), length $L_4$ being given by the following relation:

$$L_4 = \frac{\pi H n_c}{2\sqrt{n_c^2 - n_g^2}}$$

Fig 1

Fig 2

Fig 3

Fig 4A

Fig 4B

Fig 5A

Fig 5B

Fig 6A

Fig 6B

**Fig 7**

**Fig 8**

**Fig 9**

18

40
40
40

**Fig 10**

44 — 42
44 — 42
44 — 42
44 — 42
44 — 42
44
42
44
42
44
42

**Fig 11**

$n_{int}$

$n_g$

$n_g$

52

52

**Fig 12A**

Fig 12B

Fig 12C

Fig 12D

Fig 12E

Fig 12F

Fig 12G

Fig 12H

**Fig 13A**

**Fig 13B**

**Fig 14A**

**Fig 14B**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1663501
- US 2003035620 A
- US 2016011375 A
- US 2010135615 A

**Littérature non-brevet citée dans la description**

- **PENG SUN ; RONALD M. REANO.** *OPTICS EXPRESS,* 16 Mars 2009, vol. 17 (6), 4565